# EUROPÄISCHE PATENTSCHRIFT

(11) **EP 2 310 781 B1**
(45) Veröffentlichungstag und Bekanntmachung des Hinweises auf die Patenterteilung: **17.08.2016**
(21) Anmeldenummer: 09765597.1
(22) Anmeldetag: 16.06.2009
(51) Int. Cl.: F26B 5/06

(54) **VORRICHTUNG UND VERFAHREN ZUR SERIENMÄSSIGEN GEFRIERTROCKNUNG**
LARGE-SCALE LYOPHILIZATION DEVICE AND METHOD
SYSTÈME ET PROCÉDÉ DE LYOPHILISATION EN SÉRIE

(30) Priorität: 19.06.2008 DE 102008030269
(43) Veröffentlichungstag der Anmeldung: 20.04.2011
(73) Patentinhaber: Arzneimittel GmbH Apotheker Vetter & Co. Ravensburg, 88212 Ravensburg (DE)
(72) Erfinder: BÖTTGER, Frank, 88214 Ravensburg (DE); HÄUPTLE, Martin, 88639 WALD (DE)
(74) Vertreter: Gleiss, Alf-Olav
(86) Internationale Anmeldenummer: PCT/EP2009/004312
(87) Internationale Veröffentlichungsnummer: WO 2009/153017

(56) Entgegenhaltungen:
- DE-A1- 10 310 632
- DE-B- 1 178 787
- US-A1- 2006 053 652

## Beschreibung

Die Erfindung betrifft eine Vorrichtung zur serienmäßigen Gefriertrocknung pharmazeutischer Lösungen in medizinischen Hohlkörpern gemäß Oberbegriff des Anspruchs 1. Die Erfindung betrifft weiterhin ein Verfahren zur Kontrolle und/oder Steuerung der serienmäßigen Gefriertrocknung pharmazeutischer Lösungen in medizinischen Hohlkörpern mit den Merkmalen des Oberbegriffs des Anspruchs 18.

Vorrichtungen zur serienmäßigen Gefriertrocknung pharmazeutischer Lösungen in medizinischen Hohlkörpern sind bekannt. Der Prozess des Gefriertrocknens findet dabei aus Gründen der Wirtschaftlichkeit in einem höchstmöglichen Temperaturbereich statt, in dem es jedoch nicht zu einem Antauen beziehungsweise Strukturverlust der gefrorenen Produktmatrix kommen darf. Um sicherzustellen, dass die Produkttemperatur unterhalb eines in Abhängigkeit von der zur Gefriertrocknung bestimmten Substanz definierten Grenzwerts bleibt, werden üblicherweise Temperaturfühler in das Produkt eingebracht, die zu einer Charakterisierung und Steuerung des Gefriertrocknungszyklus dienen. Nachteilig hierbei ist, dass die Fühler aufgrund ihrer eigenen endlichen Wärmekapazität den Temperaturverlauf beeinflussen beziehungsweise die Trocknungsrate verfälschen können. Aus diesem Grund werden Gefriertrocknungsprozesse häufig so ausgelegt, dass eine hinreichende Sicherheitsreserve hinsichtlich der Temperatur eingehalten wird. Dies bedeutet, dass der Prozess bei unnötig tiefer Temperatur gefahren wird, was zu einer herabgesetzten Trocknungsrate führt. Hierdurch dauert der Prozess in vielen Fällen erheblich länger als dies nötig wäre, wenn im höchstmöglichen Temperaturbereich gearbeitet werden könnte. Die Gefahr beim Überschreiten eines gewissen Grenzwerts der Temperatur liegt darin, dass der von der zur Gefriertrocknung bestimmten Substanz gebildete Kuchen kollabieren kann, wenn wahlweise die Atmosphäre des Gefriertrockners zu feucht oder die Temperatur des Gefrierguts zu warm wird. Hierbei hängen beide Prozessparameter - also Feuchtigkeit der Atmosphäre im Gefriertrockner sowie Produkttemperatur - über den Sättigungsdampfdruck der zur Gefriertrocknung bestimmten Substanz zusammen. Um einen Kollaps des Kuchens zu vermeiden ist es daher wichtig, vor dem Anfahren einer serienmäßigen Gefriertrocknung Prozessparameter festzulegen, die einen dauerhaften Erfolg des Prozesses gewährleisten. Solche Prozessparameter sind beispielsweise die Produkttemperatur, beziehungsweise die Temperatur der Regalböden der Gefriertrocknungsvorrichtung, der in dem Gefriertrockner herrschende Druck, die Feuchtigkeit der Atmosphäre innerhalb des Gefriertrockners, sowie der zeitliche Verlauf dieser Parameter über den gesamten Prozess und nicht zuletzt auch die Gesamtdauer des Prozesses. Es ist selbstverständlich, dass die hierbei einzustellenden Werte jeweils von der konkreten, zur Gefriertrocknung bestimmten Substanz abhängen. Soll also ein Gefriertrocknungszyklus für eine Substanz entwickelt werden, bei der bisher keine Erfahrungen bezüglich des Gefriertrocknens vorliegen, müssen die relevanten Parameter experimentell ermittelt werden. Zu diesem Zweck können miniaturisierte Gefriertrocknungseinrichtungen vorgesehen sein, die auf dem Probentisch eines Mikroskops angeordnet werden können. Der Verlauf der Gefriertrocknung ist dabei entweder mit dem bloßen Auge oder mit Hilfe einer Kamera durch die Optik des Mikroskops und eine lichtdurchlässige Wandung der miniaturisierten Gefriertrocknungseinrichtung beobachtbar. Auf diese Weise kann nach dem Prinzip des Versuchs und Irrtums vorzugsweise in mehreren Testreihen festgestellt werden, bei welchen Prozessparametern ein Kuchen des Gefriertrockenguts kollabiert und bei welchen ein erfolgreicher Prozess stattfindet. Die derart ermittelten Prozessparameter können dann insbesondere in Form vorzugsweise unter Berücksichtigung einer Sicherheitsmarge einzuhaltender Grenzparameter auf die serienmäßige Gefriertrocknung übertragen werden, wobei hierbei wiederum zur Charakterisierung und Steuerung des Prozesses die bereits oben beschriebenen Temperaturfühler zum Einsatz kommen. Da diese jedoch - wie gesagt - den Prozess selbst auf unerwünschte Weise beeinflussen, wäre es wünschenswert, eine Möglichkeit der Prozesscharakterisierung und Steuerung zu haben, die zum einen keinen direkten Kontakt mit dem Gefriertrockengut benötigt, zum anderen auch den Prozess selbst nicht in unerwünschter Weise beeinflusst. Außerdem wäre es wünschenswert, dass die neue Möglichkeit der Prozesscharakterisierung und Steuerung eine Online-Kontrolle in dem Sinne ermöglicht, dass während des Gefriertrocknungsprozesses auswertbare Kriterien zur Steuerung beziehungsweise Regelung der Prozessparameter herangezogen werden können, sodass die Prozessparameter stets in einem optimalen Bereich gehalten werden können, ohne dass auf zuvor in separaten Experimenten aufwändig und umständlich ermittelte Grenzparameter zurückgegriffen werden muss.

Außerdem ist eine Vorrichtung zur serienmäßigen Gefriertrocknung pharmazeutischer Lösungen in medizinischen Hohlkörpern bekannt, die eine Gefriertrocknungseinrichtung und eine Kamera aufweist (DE 103 10 632 A1). Diese nimmt Bilder einer zur Gefriertrocknung bestimmten pharmazeutischen Lösung auf, wobei diese Bilder zur Steuerung und/oder Kontrolle des Gefriertrocknungsprozesses verwendbar sind. Mittels der bekannten Vorrichtung soll die Trockenzeit gegenüber herkömmlichen Verfahren verkürzt werden.

Aufgabe der Erfindung ist es daher, eine Vorrichtung zu schaffen, die in der Lage ist, den Gefriertrocknungszyklus sehr exakt zu beobachten, zu charakterisieren, kontrollieren und/oder zu steuern, ohne dabei in direkten Kontakt mit dem Gefriertrockengut treten zu können beziehungsweise den Prozess in unerwünschter Weise zu beeinflussen. Außerdem soll eine Online-Kontrolle beziehungsweise Steuerung und/oder Regelung der Prozessparameter anhand von während des Gefriertrocknungszyklus auswertbaren Kriterien möglich sein, sodass ein Rückgriff auf zuvor in separaten, unabhängigen Experimenten ermittelte Grenzparameter nicht nötig ist, und die Prozessparameter stets in einem optimalen Bereich gehalten werden können.

Die der Erfindung zugrundeliegende Aufgabe wird gelöst durch eine Vorrichtung mit den Merkmalen des Anspruchs 1. Die Vorrichtung weist eine Gefriertrocknungseinrichtung und mindestens eine Kamera auf, wobei von der mindestens einen Kamera Bilder mindestens einer zur Gefriertrocknung bestimmten pharmazeutischen Lösung aufnehmbar sind. Bei dieser Vorrichtung ist vorgesehen, dass die Bilder zur Steuerung und/oder Kontrolle des Gefriertrocknungsprozesses verwendbar sind. Die von der Kamera aufgezeichneten Bilder werden also nicht primär dazu verwendet, im Nachhinein den Erfolg oder Misserfolg des Prozesses einer Wahl bestimmter Prozessparameter zuschreiben zu können, sondern sie werden stattdessen herangezogen, um den Verlauf des Prozesses aktiv kontrollieren und/oder steuern zu können. Es sind also während des gesamten Prozesses Bilder von der zur Gefriertrocknung bestimmten Substanz aufnehmbar, die auf die Frage hin beurteilt werden können, ob möglicherweise ein Kollaps des Gefriertrockenguts bevorsteht, oder wie sich das Gut im Laufe des Prozesses entwickelt. Die Vorrichtung zeichnet sich dadurch aus, dass die Kamera in einem evakuierbaren Innenraum der Gefriertrocknungseinrichtung angeordnet ist. Daher ist eine besonders exakte Beobachtung und Darstellung der zur Gefriertrocknung bestimmten pharmazeutischen Lösung während des Gefriertrocknungsprozesses möglich. Es kann beispielsweise eine Prüfperson die Bilder auf einem Monitor überwachen und gegebenenfalls regelnd beziehungsweise steuernd in den Prozess eingreifen. Zu diesem Zweck kann die Prüfperson die Prozessparameter wie Druck, Temperatur, Feuchtigkeit in der Atmosphäre des Gefriertrockners, die Zeitpunkte und -dauern der einzelnen Phasen des Prozesses unmittelbar während der Gefriertrocknung variieren und an die aus den Bildern gewonnenen Erkenntnisse anpassen. Die von der Prüfperson gewonnenen Erkenntnisse sind sehr exakt, weil die Kamera, wie gesagt, in dem Innenraum der Gefriertrocknungseinrichtung angeordnet ist. Übliche Verzerrungen der von einer Kamera aufgenommenen Bilder, wie sie bei bekannten Vorrichtungen häufig gegeben sind, stören in diesem Fall die Auswertung durch die Prüfperson nicht. Es ist daher möglich, den Gefriertrocknungszyklus sehr exakt zu beobachten und zu charakterisieren beziehungsweise zu steuern. Es ist also möglich, eine sehr exakte Online-Überwachung der Gefriertrocknung durchzuführen. Hierdurch können die Prozessparameter näher an die durch die Produkteigenschaften definierte physikalische Grenze herangefahren werden. Es kann also beispielsweise eine maximal mögliche Produkttemperatur gewählt werden, bei der die Trocknungszeit deutlich kürzer ausfällt als bei der in herkömmlichen Vorrichtungen gewählten, durch eine Sicherheitsmarge bestimmten Temperatur. Insbesondere erübrigt es sich, in vorherigen, unabhängigen Experimenten Grenzparameter zu ermitteln, die dann unter Berücksichtigung einer Sicherheitsmarge eingehalten werden. Stattdessen wird der anhand der Bilder von der zur Gefriertrocknung bestimmten Substanz ermittelbare Zustand des Gefriertrockenguts als Kriterium für die Prozesssteuerung herangezogen, sodass es ohne vorherige Kenntnis experimenteller Grenzparameter möglich ist, den Prozess während seiner gesamten Dauer nahe an der Grenze des physikalisch Möglichen zu fahren. Hierdurch fällt der Trocknungsprozess deutlich wirtschaftlicher aus, weil pro Zeiteinheit eine größere Substanzmenge gefriergetrocknet werden kann, und weil vorherige aufwändige Versuche zur Bestimmung von Grenzparametern entfallen können. Gleichzeitig wird das Risiko hinsichtlich der Produktbeeinträchtigung minimiert.

Es wird auch eine Vorrichtung bevorzugt, die sich dadurch auszeichnet, dass eine Auswerteeinrichtung vorgesehen ist, welche die Bilder auswertet. In diesem Ausführungsbeispiel ist es nicht notwendig, dass eine Prüfperson den Gefriertrocknungsprozess beobachtet. Stattdessen kann eine Auswerteeinrichtung vorgesehen sein, die beispielsweise mittels eines Bildauswertungsprogramms die von der mindestens einen Kamera gelieferten Bilder überwacht und auswertet.

In diesem Zusammenhang wird auch eine Vorrichtung bevorzugt, bei der die Auswerteeinrichtung der Änderung von Parametern des Gefriertrocknungsprozesses dient. Die Auswerteeinrichtung nimmt hierbei beispielsweise mittels eines Bilderauswertungsprogramms eine Bewertung der durch die mindestens eine Kamera gelieferten Bilder vor und beurteilt so, ob möglicherweise Parameter des Trocknungsprozesses variiert werden müssen, um die gewünschte Produktqualität zu gewährleisten. Ist dies der Fall, kann die Auswerteeinrichtung eine entsprechende Änderung der Prozessparameter veranlassen, sodass dass diese wieder innerhalb eines Wertebereichs liegen, der die gewünschte Produktqualität garantiert.

Auch wird eine Vorrichtung bevorzugt, bei der anhand der Auswertung der Bilder Signale von der Auswerteeinrichtung an eine Steuerungseinrichtung der Gefriertrocknungseinrichtung gesendet werden können und bei der aufgrund dieser Signale die Parameter des Gefriertrocknungsprozesses veränderbar sind. In diesem Ausführungsbeispiel ist also zusätzlich zu der Auswerteeinrichtung auch eine Steuerungseinrichtung vorgesehen, welche die Gefriertrocknungseinrichtung beziehungsweise den Gefriertrocknungsprozess steuert. Die Auswerteeinrichtung wertet die von der mindestens einen Kamera gelieferten Bilder der zur Gefriertrocknung bestimmten Substanz aus und führt dabei insbesondere eine Bewertung der Bilder durch. Aufgrund dieser Bewertung können Signale von der Auswerteeinrichtung an die Steuereinrichtung gesandt werden, die zu einer Veränderung der Parameter des Gefriertrocknungsprozesses führen. Hierdurch soll sichergestellt werden, dass die Prozessparameter stets in einem Wertebereich liegen, der eine gewünschte Produktqualität gewährleistet.

Weitere vorteilhafte Ausgestaltungen ergeben sich aus den Unteransprüchen.

Aufgabe der Erfindung ist es außerdem, ein Verfahren zu schaffen, das eine Kontrolle und/oder Steuerung der serienmäßigen Gefriertrocknung pharmazeutischer Lösungen in medizinischen Hohlkörpern erlaubt, ohne dass dabei ein direkter Kontakt mit den zur Gefriertrocknung bestimmten Substanzen hergestellt werden muss oder dass der Prozess im Rahmen des Verfahrens verwendete Vorrichtung auf unerwünschte Weise beeinflusst wird. Außerdem soll das Verfahren eine sehr exakte Online-Kontrolle und/oder Steuerung beziehungsweise Regelung des Gefriertrocknungsprozesses ermöglichen, wodurch der Prozess stets nahe an der Grenze des physikalisch Möglichen gehalten werden kann. Mit Hilfe von während des Gefriertrocknungsprozesses auswertbaren Kriterien soll eine Steuerung beziehungsweise Regelung der Prozessparameter möglich sein, ohne dass auf zuvor in aufwändigen Testreihen ermittelte Grenzparameter unter Einhaltung einer Sicherheitsmarge zurückgegriffen werden muss.

Diese Aufgabe der Erfindung wird gelöst durch ein Verfahren mit den Merkmalen des Anspruchs 18. Es wird dabei insbesondere eine Vorrichtung verwendet, wie sie in Anspruch 1 definiert und durch die auf diesen rückbezogenen Unteransprüche näher beschrieben ist. Es sind eine Gefriertrocknungseinrichtung und mindestens eine Kamera vorgesehen, und die mindestens eine Kamera nimmt Bilder von mindestens einer zur Gefriertrocknung bestimmten pharmazeutischen Lösung auf. Bei diesem Verfahren werden diese Bilder zur Steuerung und/oder Kontrolle des Gefriertrocknungsprozesses herangezogen. Dies kann beispielsweise geschehen, indem eine Prüfperson die Bilder auf einem Monitor während des Prozesses überwacht und gegebenenfalls eine Veränderung der Prozessparameter vornimmt. Das Verfahren zeichnet sich dadurch aus, dass die Kamera in einem evakuierbaren Innenraum der Gefriertrocknungseinrichtung angeordnet ist und Bilder in diesem Innenraum aufnimmt. Die gewonnenen Bilder können ohne störende Einrichtungen wie Glasfenster zum Innenraum der Gefriertrocknungseinrichtung gewonnen werden, sodass die Prüfperson einen sehr exakten Eindruck von dem Zustand des Gefriertrockengutes erhält. Die Auswertung beziehungsweise Beurteilung der von der mindestens einen Kamera aufgenommenen Bilder liefert Kriterien, anhand derer eine Online-Kontrolle des Gefriertrocknungsprozesses sehr gut möglich ist. Der Zustand des Gefriertrockengutes ist so zu jedem Zeitpunkt des Prozesses exakt beobachtbar, wodurch die Prozessparameter nahe an die Grenze des physikalisch Möglichen gefahren werden können. Hierbei muss nicht mehr auf zuvor in aufwändigen Testreihen ermittelte Grenzparameter unter Einhaltung einer Sicherheitsmarge zurückgegriffen werden, sondern die optische Online-Kontrolle ermöglicht eine dynamische Steuerung beziehungsweise Regelung des Gefriertrocknungsprozesses ausschließlich auf der Grundlage des optisch ermittelten momentanen Zustands des Gefriertrockengutes.

Es wird auch ein Verfahren bevorzugt, bei dem die Bilder mittels einer Auswerteeinrichtung ausgewertet werden. Hierbei müssen die Bilder nicht von einer Prüfperson ausgewertet werden, sondern sie werden vorzugsweise softwareunterstützt von einem Bildverarbeitungsprogramm ausgewertet und in Hinblick auf die zu gewährleistende Produktqualität bewertet.

Dabei wird auch ein Verfahren bevorzugt, bei dem mittels der Auswerteeinrichtung Parameter des Gefriertrocknungsprozesses veränderbar sind. Aufgrund der Bewertung der von der mindestens einen Kamera gelieferten Bilder können hier also die Parameter des Gefriertrocknungsprozesses so angepasst werden, dass eine gewünschte Produktqualität gewährleistet ist.

Schließlich wird auch ein Verfahren bevorzugt, bei dem anhand der Auswertung der Bilder Signale von der Auswerteeinrichtung an eine Steuerungseinrichtung der Gefriertrocknungseinrichtung gesandt werden, aufgrund derer die Parameter des Gefriertrocknungsprozesses verändert werden. Die von der mindestens einen Kamera gelieferten Bilder werden also von der Auswerteeinrichtung ausgewertet und insbesondere hinsichtlich der gewünschten Produktqualität bewertet, und es werden auf der Grundlage dieser Bewertung Signale von der Auswerteeinrichtung an eine Steuereinrichtung der Gefriertrocknungseinrichtung gesandt, die dazu dienen, die Parameter des Gefriertrocknungsprozesses so zu verändern, dass eine gewünschte Produktqualität eingehalten werden kann.

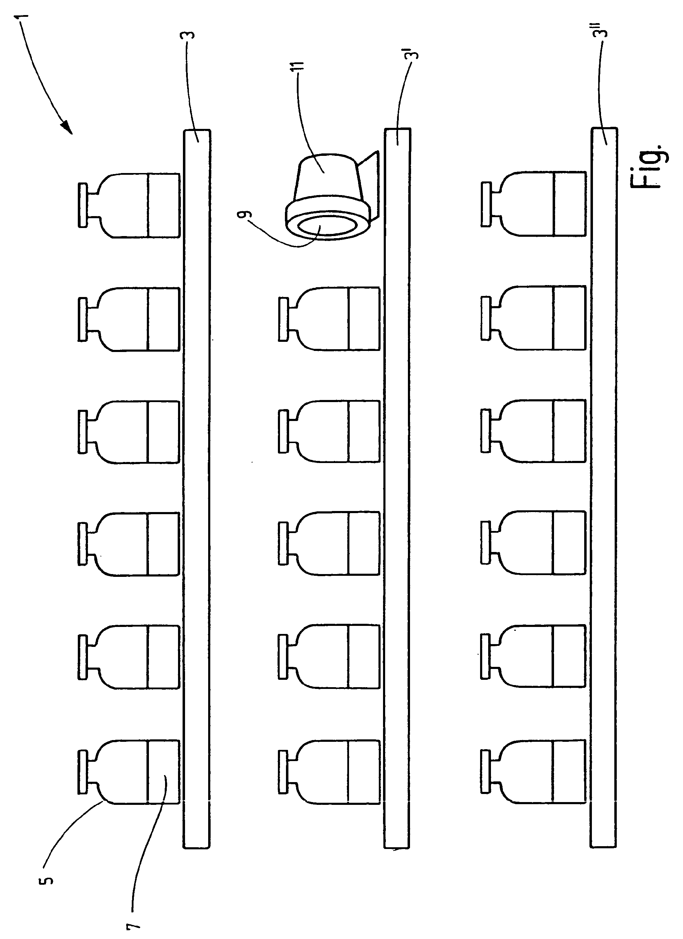

Die Erfindung wird im Folgenden anhand der Zeichnung näher erläutert.

Die einzige Figur zeigt schematisch den Innenraum 1 einer Einrichtung zur serienmäßigen Gefriertrocknung pharmazeutischer Lösungen in medizinischen Hohlkörpern. Beispielhaft sind drei Regalböden 3, 3', 3" angedeutet, die vorzugsweise temperierbar sind, um zum einen im Start des Gefriertrocknungsprozesses die zur Gefriertrocknung bestimmten Substanzen in dem Innenraum 1 einfrieren zu können, und um zum anderen während des Gefriertrocknungsprozesses die zur Sublimation des Lösungsmittels erforderliche Wärmemenge in die medizinischen Hohlkörper und hierdurch mittelbar in die Substanzen einleiten zu können. Auf den Regalböden 3, 3', 3" sind medizinische Hohlkörper angeordnet, die hier als Phiolen 5 ausgebildet sind. Diese umfassen eine zur Gefriertrocknung bestimmte Substanz 7. Hier ist eine Kamera 9 vorgesehen, die beispielhaft auf dem mittleren Regalboden 3' angeordnet ist und Bilder von mindestens einer der zur Gefriertrocknung bestimmten pharmazeutischen Lösungen beziehungsweise Substanzen 7 aufnehmen kann.

In dem dargestellten Ausführungsbeispiel ist lediglich eine Kamera 9 auf dem mittleren Regalboden 3' vorgesehen. Haben die Prozessparameter an jedem Ort des Innenraums 1 dieselben Werte, reicht es im Prinzip aus, eine Phiole 5 mit einer Substanz 7 mittels der Kamera 9 zu beobachten. Es können allerdings auch mehrere Kameras 9 vorgesehen sein, die Bilder der beobachteten Phiole 5 und der beobachteten Substanz 7 aus verschiedenen Richtungen aufnehmen. Auf diese Weise kann sichergestellt werden, dass die gefrorene Substanz 7 nicht beispielsweise lokal auf einer Seite antaut, die von einer Kamera 9 nicht beobachtet wird.

Da sich die Prozessparameter auf den verschiedenen Regalböden 3, 3', 3" typischerweise zumindest etwas unterscheiden, kann es sinnvoll sein, auf jedem der Regalböden 3, 3', 3" mindestens eine Kamera 9 anzuordnen, die Bilder von mindestens einer Phiole 5 mit einer Substanz 7 aufnimmt. So ist sichergestellt, dass der Gefriertrocknungsprozess auf allen Regalböden 3, 3', 3" gleichermaßen kontrolliert wird und gegebenenfalls gesteuert werden kann. Es kann in diesem Fall nicht vorkommen, dass die Prozessparameter auf einem Regalboden 3, 3', 3", der mittels einer Kamera 9 unter Beobachtung steht, noch in einem optimalen Wertebereich sind, während sie auf einem anderen Regalboden 3, 3', 3" bereits von dem optimalen Wertebereich abweichen, sodass die gewünschte Produktqualität nicht mehr garantiert werden kann. Selbstverständlich ist es auch möglich, mehrere Phiolen 5 mit Substanzen 7 von mehreren Kameras 9 aufnehmen zu lassen. Dabei können die Kameras 9 so angeordnet sein, dass Bilder einer oder mehrerer Phiolen 5 und Substanzen 7 aus verschiedenen Richtungen aufgenommen werden.

Die Kamera 9 kann als analoge Kamera, als Digitalkamera, als Makrokamera, vorzugsweise Kamera mit Makroobjektiv, oder als Webcam ausgebildet sein. Vorzugsweise werden die von der mindestens einen Kamera 9 gelieferten Bilder elektronisch aufgezeichnet und ausgewertet. Dies ist auf besonders einfache Weise möglich, wenn die Kamera 9 eine Digitalkamera ist. Vorzugsweise ist die Kamera 9 miniaturisiert, sodass sie einen geringen Raumbedarf aufweist und in dem Innenraum 1 wenig Platz wegnimmt, der so medizinischen Hohlkörpern zur Verfügung steht.

Die Kamera 9 wird vorzugsweise in Intervallen ausgelöst, kann aber auch im Dauerbetrieb Bildersequenzen, also Filme, aufzeichnen. Es ist jedoch vorteilhaft, die Kamera 9 nicht im Dauerbetrieb zu betreiben, sondern die Bilder in Intervallen aufzeichnen zu lassen. Auf diese Weise fällt die betriebsbedingte Erwärmung der Kamera 9 deutlich geringer aus, sodass die von dieser an den Innenraum 1 abgegebene Wärme minimiert wird. Die Zeitpunkte für die Aufnahme der Bilder können dabei mit relevanten Prozessparametern synchronisiert werden. Es kann also vorgesehen sein, dass beispielsweise ein Druckanstieg im Innenraum 1 zum Auslösen mindestens einer Kamera 9 führt. Selbstverständlich können auch andere Prozessparameter zur Zeitgebung für die Aufnahme von Kamerabildern herangezogen werden. Andererseits ist es auch möglich, die Bilder in festen oder auch variablen Intervallen aufzunehmen, wobei die Steuerung der Bildaufnahme in eine Steuerungseinheit des Gefriertrockners integriert sein kann. Es ist allerdings auch möglich, dass eine Prüfperson in regelmäßigen Abständen oder nach Bedarf die Aufnahme von Bildern auslöst, um diese dann auswerten zu können.

Typischerweise ist in dem Innenraum 1 eines Gefriertrockners keine Beleuchtungseinrichtung vorgesehen, die eine Beleuchtung der medizinischen Hohlkörper während des Prozesses erlaubt. Soll zur Aufnahme der Bilder durch die mindestens eine Kamera 9 der sichtbare Teil des elektromagnetischen Spektrums genutzt werden, muss demnach eine Beleuchtungseinrichtung in dem Innenraum 1 angeordnet werden, sodass hinreichend Licht vorhanden ist, um die gewünschten Bilder aufzunehmen. Diese Beleuchtungseinrichtung ist vorzugsweise als Kaltlichtquelle ausgelegt, um die Temperatur des Innenraums 1 so wenig wie möglich zu beeinflussen.

Vorzugsweise umfasst die Kamera 9 die Beleuchtungseinrichtung. Dies hat den Vorteil, dass die Beleuchtungseinrichtung so mit der Kamera 9 verbunden sein kann, dass sie stets genau den Bereich ausleuchtet, den die Kamera 9 aufnimmt. Besonders vorteilhaft ist es, wenn die Beleuchtungseinrichtung in die mindestens eine Kamera 9 integriert ist. So kann eine besonders kompakte Bauweise realisiert werden.

Im Zusammenhang mit der Verwendung einer Kamera 9 kann problematisch sein, dass bei Erniedrigung des Drucks im Innenraum 1 aus dem Material der Kamera 9 Stoffe ausgasen, die zu einer Erhöhung des Drucks im Innenraum 1 führen. Weist die Kamera 9 eine hohe Ausgasrate aus, kann es vorkommen, dass die der Evakuierung des Innenraums 1 dienende Pumpe die anfallende Gaslast nicht abpumpen kann. Hierbei ist nicht nur ein Ausgasen der möglicherweise Kunststoff umfassenden Kameramaterialien problematisch, sondern auch die Ausbildung so genannter virtueller Lecks, wobei beispielsweise durch Schraubverbindungen an der äußeren Wandung der Kamera 9 Gas aus dem Inneren der Kamera 9 sehr langsam ausdiffundieren kann, was zu einer dauerhaften Erhöhung des Drucks in dem Raum 1 führt. Es kann nämlich typischerweise sehr lange dauern, bis der Druck über solche virtuellen Lecks ausgeglichen ist. Weiterhin kann es problematisch sein, wenn die Kamera 9 in ihrem Inneren einen höheren Druck aufweist als die äußere Atmosphäre. Die Kamera könnte hierdurch sogar beschädigt werden. Aus diesem Grund kann es sinnvoll sein, die Kamera 9 in einem Gehäuse 11 anzuordnen, welches diese aufnimmt und vorzugsweise vakuumdicht umschließt. Im Inneren des Gehäuses 11 kann dann Normaldruck herrschen, während der Druck im Innenraum 1 des Gefriertrockners nicht beeinflusst wird. Auf diese Weise wird zum einen die Kamera geschont, zum anderen bleibt eine Beeinflussung des Drucks in dem Innenraum 1 aus. Es ist selbstverständlich, dass das Gehäuse 11 zu diesem Zweck vakuumdicht ausgebildet sein muss.

Weiter oben wurde bereits angesprochen, dass sich die Kamera 9 im Laufe ihres Betriebs erwärmen kann. Um diese Abwärme nicht an die Atmosphäre in dem Innenraum 1 abzugeben, kann vorgesehen sein, dass die mindestens eine Kamera 9 wärmeisoliert ausgebildet ist. Vorzugsweise kann auch das vakuumdichte Gehäuse 11, das die Kamera 9 aufnimmt, wärmeisoliert sein.

Soll die Gefriertrocknung unter sterilen Bedingungen stattfinden, ist es von großem Vorteil, wenn die mindestens eine Kamera 9 und/oder das mindestens eine vakuumdichte Gehäuse 11 eine geringe Partikeldichte aufweisen. Außerdem wird bevorzugt, dass die mindestens eine Kamera 9 und/oder das mindestens eine vakuumdichte Gehäuse 11 sterilisierbar sind. In diesem Zusammenhang ist es besonders vorteilhaft, wenn das Gehäuse 11 und/oder die Kamera 9 nicht auf einem Regalboden 3, 3', 3" angeordnet, sondern unmittelbar an einem die medizinischen Hohlkörper beziehungsweise Phiolen 5 aufnehmenden Magazin befestigt, beispielsweise angeklipst, sind. In diesem Fall können die Kamera 9 beziehungsweise das Gehäuse 11 den gesamten Sterilisations- und Abfüll- beziehungsweise Gefriertrocknungsprozess zusammen mit dem Magazin durchlaufen, sodass jeweils mindestens eine Kamera 9 beziehungsweise Gehäuse 11 einem Magazin fest zugeordnet sein kann und prinzipiell nicht von diesem getrennt werden muss. Besonders vorteilhaft ist, wenn die Daten und/oder Energieübertragung von beziehungsweise zu der Kamera 9 drahtlos erfolgt. So können die Magazine prinzipiell auf die gleiche Weise gehandhabt werden, als wenn keine Kamera 9 mit dem Magazin verbunden wäre. Die Kamera 9 kann beispielsweise mit einer Antenne zur drahtlosen Datenübertragung und mit einer Batterie zur Energieversorgung bestückt sein. Hierbei kann auch ein Akkumulator zum Einsatz kommen. Andererseits kann auch eine induktive Übertragungsstrecke vorgesehen sein, die sowohl Energie als auch Daten von einer externen Quelle zu der Kamera 9 beziehungsweise in umgekehrter Richtung überträgt. Auch eine optische Übertragungsstrecke ist möglich.

In einem Gehäuse 11 können mehrere Kameras 9 untergebracht sein, es kann aber auch jeder Kamera 9 ein eigenes Gehäuse 11 zugeordnet sein.

Die mindestens eine Kamera 9 kann auch als endoskopisches System ausgelegt sein, das beispielsweise in eine Phiole 5 einbringbar ist. Auf diese Weise kann die Kamera 9 besonders dicht an die zur Gefriertrocknung bestimmte Substanz 7 herangefahren werden, um bespielsweise besonders detailreiche Bilder von der Substanz 7 aufnehmen zu können. Andererseits kann ein solches endoskopisches System auch dazu dienen, einen Lichtleiter über eine Durchführung in den Innenraum 1 des Gefriertrockners einzubringen, durch den die Bilder aus dem Innenraum 1 an eine externe Kamera 9 weiterleitbar sind. Die Kamera 9 kann hierbei also vollständig außerhalb des Innenraums 1 angeordnet sein und muss so geringeren Anforderungen an die Vakuumdichtigkeit, Partikeldichte oder Sterilität genügen. Es können auch mehrere Lichtleiter in dem Innenraum 1 verteilt sein, die über Durchführungen aus dem Innenraum 1 herausgeführt werden und wahlweise verschiedenen Kameras 9 oder einer einzigen Kamera 9 zugeordnet sind. Ist eine einzige Kamera 9 vorgesehen, so kann diese mit einer Einrichtung verbunden sein, welche zeitlich getaktet zwischen den von den verschiedenen Lichtleitern gelieferten Bildinformationen umschalten kann, sodass die Kamera 9 zu verschiedenen Zeiten Bilder von verschiedenen Orten oder aus verschiedenen Richtungen in dem Innenraum 1 aufnehmen kann. Ein weiterer Vorteil solcher Lichtleiter besteht darin, dass diese im Innenraum 1 besonders wenig Raum erfordern, sodass mehr Raum für medizinische Hohlkörper übrigbleibt.

Ist die mindestens eine Kamera 9 dagegen in dem Innenraum 1 des Gefriertrockners angeordnet, ist sie vorzugsweise so ausgebildet, dass sie in einem Temperaturbereich von -60°C bis +60°C einsetzbar ist. Hierdurch wird die Funktionsfähigkeit der Kamera 9 während des gesamten Prozesses gewährleistet.

Die mindestens eine Kamera 9 kann auch so ausgebildet sein, dass sie den nicht sichtbaren Bereich des elektromagnetischen Spektrums zur Aufnahme von Bildern nutzt. Hierzu muss sie in diesem Bereich empfindlich sein. Die Kamera 9 kann beispielsweise Wärmebilder aufnehmen, wenn sie auf den infraroten Teil des elektromagnetischen Spektrums empfindlich ist. Dies kann vorteilhaft sein, da so zum einen auf eine Beleuchtungseinrichtung verzichtet werden kann, zum anderen die Produkttemperatur der Substanz durch Falschfarben ortsaufgelöst darstellbar ist. Man erhält auf diese Weise eine zur Struktur der Substanz 7 komplementäre Information, indem man den ortsabhängigen Verlauf der Temperatur innerhalb der Substanz 7 erfasst.

Die von der mindestens einen Kamera 9 aufgenommenen Bilder von mindestens einer zur Gefriertrocknung bestimmten pharmazeutischen Lösung beziehungsweise Substanz 7 sollen zur Steuerung und/oder Kontrolle des Gefriertrocknungsprozesses verwendbar sein. Dazu kann es vorgesehen sein, dass eine Prüfperson die Bilder auswertet, und gegebenenfalls die Prozessparameter wie beispielsweise die Temperatur, den Druck, die Feuchtigkeit beziehungsweise den zeitlichen Verlauf dieser Parameter während des Prozesses, oder auch die Gesamtprozessdauer auf die durch die Bilder gewonnenen Erkenntnisse anpasst. Andererseits kann eine Auswerteeinrichtung vorgesehen sein, die beispielsweise mit Hilfe eines Bildauswertungsprogramms die Bilder auswertet und insbesondere in Hinblick auf eine gewünschte Produktqualität beurteilt. Aufgrund dieser Auswertung beziehungsweise Beurteilung können dann Änderungen der Parameter des Gefriertrocknungsprozesses vorgenommen werden, was vorzugsweise automatisiert geschieht. Hierzu kann die Auswerteeinrichtung auf der Grundlage der Auswertung beziehungsweise Bewertung der Bilder Signale an eine Steuerungseinrichtung der Gefriertrocknungseinrichtung senden, die geeignet sind, die Parameter des Gefriertrocknungsprozesses so zu verändern, dass eine gewünschte Produktqualität erreicht wird. Die Steuerungseinrichtung kann dabei auch die Zeitgebung für die Aufnahme von Bildern durch die mindestens eine Kamera 9 übernehmen. Dabei können die Aufnahmen auch durch Veränderungen in den Produktparametern auslösbar sein.

Im Folgenden soll das Verfahren zur Kontrolle und/oder Steuerung der serienmäßigen Gefriertrocknung pharmazeutischer Lösungen in medizinischen Hohlkörpern näher erläutert werden. In den Innenraum 1 einer Gefriertrocknungseinrichtung werden medizinische Hohlkörper, beispielsweise Phiolen 5 eingebracht, die zur Gefriertrocknung bestimmte pharmazeutische Lösungen beziehungsweise Substanzen 7 enthalten. Mindestens eine Kamera nimmt Bilder von mindestens einer der Phiolen 5 beziehungsweise Substanzen 7 auf, die zur Steuerung und/oder Kontrolle des Gefriertrocknungsprozesses herangezogen werden. Wie oben beschrieben, kann hierzu eine Prüfperson oder eine Auswerteeinrichtung, die vorzugsweise ein Bildauswertungsprogramm umfasst, eingesetzt werden. Die Prüfperson oder die Auswerteeinrichtung kontrollieren anhand der Bilder den Verlauf beziehungsweise Fortschritt des Gefriertrocknungsprozesses und greifen gegebenenfalls in diesen ein, indem sie Prozessparameter verändern. Hierzu ist es nötig, die von der mindestens einen Kamera 9 aufgenommenen Bilder in Hinblick auf eine gewünschte Produktqualität zu bewerten. In Abhängigkeit dieser Bewertung können dann die Parameter des Gefriertrocknungsprozesses gegebenenfalls verändert werden. In besonders vorteilhafter Weise werden anhand der Auswertung der Bilder Signale von der Auswerteeinrichtung an eine Steuerungseinrichtung der Gefriertrocknungseinrichtung gesandt, aufgrund derer die Parameter des Gefriertrocknungsprozesses gegebenenfalls verändert werden.

Nach allem zeigt sich, dass mit Hilfe der erfindungsgemäßen Vorrichtung beziehungsweise des erfindungsgemäßen Verfahrens ein Betrieb einer Gefriertrocknungseinrichtung in einem höchstmöglichen Temperaturbereich möglich wird. Auch andere Parameter können näher an die durch die Produkteigenschaften definierte physikalische Grenze herangefahren werden. Dies führt zu verkürzten Trocknungszeiten und damit zu einer erhöhten Wirtschaftlichkeit des Gefriertrocknungsprozesses, wobei gleichzeitig das Risiko einer verminderten Produktqualität minimiert wird. Die Vorrichtung und das Verfahren arbeiten in Hinsicht auf die zur Gefriertrocknung bestimmten pharmazeutischen Lösungen kontaktlos und führen nicht zu einer unerwünschten Beeinflussung des Prozesses. Außerdem ermöglichen die Vorrichtung und das Verfahren eine Online-Kontrolle des gesamten Prozessverlaufs, wodurch der gesamte Prozess nicht nur kontrollierbar, sondern auch steuerbar wird. Außerdem können vorherige, separate und aufwändige Testreihen zur Ermittlung von Grenzparametern entfallen, weil ausschließlich während des Gefriertrocknungsprozesses auswertbare Kriterien in Form der Kamera-Bilder zur Kontrolle, Steuerung und/oder Regelung des Prozesses herangezogen werden. Diese Online-Kontrolle führt letztendlich zu einer reproduzierbaren und konstant hohen Produktqualität, sodass auch ein Anteil von Ausschuss deutlich gesenkt werden kann.

## Patentansprüche

1. Vorrichtung zur serienmäßigen Gefriertrocknung pharmazeutischer Lösungen in medizinischen Hohlkörpern, mit
- einer Gefriertrocknungseinrichtung und
- mindestens einer Kamera (9),
wobei von der mindestens einen Kamera (9) Bilder mindestens einer zur Gefriertrocknung bestimmten pharmazeutischen Lösung aufnehmbar sind, wobei die Bilder zur Steuerung und/oder Kontrolle des Gefriertrocknungsprozesses verwendbar sind, **dadurch gekennzeichnet, dass** die Kamera (9) in einem evakuierbaren Innenraum (1) der Gefriertrocknungseinrichtung angeordnet ist.

2. Vorrichtung nach Anspruch 1, **dadurch gekennzeichnet, dass** eine Auswerteeinrichtung vorgesehen ist, welche die Bilder auswertet.

3. Vorrichtung nach Anspruch 2, **dadurch gekennzeichnet, dass** die Auswerteeinrichtung der Änderung von Parametern des Gefriertrocknungsprozesses dient.

4. Vorrichtung nach Anspruch 3, **dadurch gekennzeichnet, dass** anhand der Auswertung der Bilder Signale von der Auswerteeinrichtung an eine Steuerungseinrichtung der Gefriertrocknungseinrichtung sendbar sind, aufgrund derer die Parameter des Gefriertrocknungsprozesses veränderbar sind.

5. Vorrichtung nach einem der vorhergehenden Ansprüche, **dadurch gekennzeichnet, dass** die mindestens eine Kamera (9) eine analoge Kamera, eine DigitalKamera, eine MakroKamera oder eine Webcam ist.

6. Vorrichtung nach einem der vorhergehenden Ansprüche, **dadurch gekennzeichnet**, eine Beleuchtungseinrichtung, vorzugsweise eine Kaltlichtquelle vorgesehen ist.

7. Vorrichtung nach Anspruch 6, **dadurch gekennzeichnet, dass** die mindestens eine Kamera (9) die Beleuchtungseinrichtung umfasst.

8. Vorrichtung nach Anspruch 7, **dadurch gekennzeichnet, dass** die Beleuchtungseinrichtung in die mindestens eine Kamera (9) integriert ist.

9. Vorrichtung nach einem der vorhergehenden Ansprüche, **dadurch gekennzeichnet, dass** mindestens ein vakuumdichtes Gehäuse (11) vorgesehen ist, welches die mindestens eine Kamera (9) aufnimmt und vorzugsweise vakuumdicht umschließt.

10. Vorrichtung nach einem der vorhergehenden Ansprüche, **dadurch gekennzeichnet, dass** die mindestens eine Kamera (9) in einem Temperaturbereich von -60 °C bis 60 °C einsetzbar ist.

11. Vorrichtung nach einem der vorhergehenden Ansprüche, **dadurch gekennzeichnet, dass** die mindestens eine Kamera (9) beziehungsweise das mindestens eine vakuumdichte Gehäuse (11) eine geringe Partikeldichte aufweisen.

12. Vorrichtung nach einem der vorhergehenden Ansprüche, **dadurch gekennzeichnet, dass** die mindestens eine Kamera (9) beziehungsweise das mindestens eine vakuumdichte Gehäuse (11) wärmeisoliert sind.

13. Vorrichtung nach einem der vorhergehenden Ansprüche, **dadurch gekennzeichnet, dass** die mindestens eine Kamera (9) beziehungsweise das mindestens eine vakuumdichte Gehäuse (11) sterilisierbar sind.

14. Vorrichtung nach einem der vorhergehenden Ansprüche, **dadurch gekennzeichnet, dass** die mindestens eine Kamera (9) beziehungsweise das mindestens eine vakuumdichte Gehäuse (11) an einem Magazin zur Aufnahme der medizinischen Hohlkörper befestigbar sind.

15. Vorrichtung nach einem der vorhergehenden Ansprüche, **dadurch gekennzeichnet, dass** mehrere Kameras (9) Bilder der mindestens einen pharmazeutischen Lösung aus verschiedenen Richtungen aufnehmen können.

16. Vorrichtung nach einem der vorhergehenden Ansprüche, **dadurch gekennzeichnet, dass** die mindestens eine Kamera (9) als endoskopisches System ausgebildet ist.

17. Vorrichtung nach einem der vorhergehenden Ansprüche, **dadurch gekennzeichnet, dass** die mindestens eine Kamera (9) im nicht sichtbaren Bereich des elektromagnetischen Spektrums empfindlich ist.

18. Verfahren zur Kontrolle und/oder Steuerung der serienmäßigen Gefriertrocknung pharmazeutischer Lösungen in medizinischen Hohlkörpern insbesondere unter Verwendung einer Vorrichtung gemäß den Ansprüchen 1 bis 17, wobei eine Gefriertrocknungseinrichtung und mindestens eine Kamera (9) vorgesehen sind, wobei die mindestens eine Kamera (9) Bilder von mindestens einer zur Gefriertrocknung bestimmten pharmazeutischen Lösung aufnimmt, wobei diese Bilder zur Steuerung und/oder Kontrolle des Gefriertrocknungsprozesses herangezogen werden, **dadurch gekennzeichnet, dass** die Kamera (9) in einem evakuierbaren Innenraum (1) der Gefriertrocknungseinrichtung angeordnet ist und Bilder in dem evakuierbaren Innenraum (1) aufnimmt.

19. Verfahren nach Anspruch 18, **dadurch gekennzeichnet, dass** die Bilder mittels einer Auswerteeinrichtung ausgewertet werden.

20. Verfahren nach Anspruch 19, **dadurch gekennzeichnet, dass** mittels der Auswerteeinrichtung Parameter des Gefriertrocknungsprozesses verändert werden.

21. Verfahren nach Anspruch 20, **dadurch gekennzeichnet, dass** anhand der Auswertung der Bilder Signale von der Auswerteeinrichtung an eine Steuerungseinrichtung der Gefriertrocknungseinrichtung gesandt werden, aufgrund derer die Parameter des Gefriertrocknungsprozesses verändert werden.

## Claims

1. Device for serially lyophilization of pharmaceutical solutions in medical hollow bodies, having
- a lyophilization unit and
- at least one camera (9),
wherein images of at least one pharmaceutical solution to be lyophilized may be recorded by the at least one camera (9), wherein the images may be used for controlling and/or monitoring the lyophilization process, **characterized in that** the camera (9) is arranged within an interior (1) of the lyophilization unit that can be evacuated.

2. Device according to claim 1, **characterized in that** an evaluation unit is provided which evaluates the images.

3. Device according to claim 2, **characterized in that** the evaluation unit is used to change parameters of the lyophilization process.

4. Device according to claim 3, **characterized in that** based on the evaluation of the images, signals may be transmitted from the evaluation unit to a control device of the lyophilization unit, and on the basis of these signals the parameters of the lyophilization process may be changed.

5. Device according to one of the preceding claims, **characterized in that** the at least one camera (9) is an analog camera, a digital camera, a macro camera, or a webcam.

6. Device according to one of the preceding claims, **characterized in that** a lighting unit, preferably a cold light source, is provided.

7. Device according to claim 6, **characterized in that** the at least one camera (9) includes the lighting unit.

8. Device according to claim 7, **characterized in that** the lighting unit is integrated into the at least one camera (9).

9. Device according to one of the preceding claims, **characterized in that** at least one vacuum-tight housing (11) is provided which accommodates the at least one camera (9) and preferably encloses it in a vacuum-tight manner.

10. Device according to one of the preceding claims, **characterized in that** the at least one camera (9) may be used in a temperature range of -60°C to 60°C.

11. Device according to one of the preceding claims, **characterized in that** the at least one camera (9) and/or the at least one vacuum-tight housing (11) have a low particle density.

12. Device according to one of the preceding claims, **characterized in that** the at least one camera (9) and/or the at least one vacuum-tight housing (11) are thermally insulated.

13. Device according to one of the preceding claims, **characterized in that** the at least one camera (9) and/or the at least one vacuum-tight housing (11) are sterilizable.

14. Device according to one of the preceding claims, **characterized in that** the at least one camera (9) and/or the at least one vacuum-tight housing (11) may be fastened to a magazine for holding the medical hollow bodies.

15. Device according to one of the preceding claims, **characterized in that** multiple cameras (9) are able to record images of the at least one pharmaceutical solution from various directions.

16. Device according to one of the preceding claims, **characterized in that** the at least one camera (9) is designed as an endoscopic system.

17. Device according to one of the preceding claims, **characterized in that** the at least one camera (9) is sensitive in the invisible range of the electromagnetic spectrum.

18. Method for monitoring and/or controlling the serially lyophilization of pharmaceutical solutions in medical hollow bodies, in particular using a device according to claims 1 through 17, wherein a lyophilization unit and at least one camera (9) are provided, wherein the at least one camera (9) records images of at least one pharmaceutical solution to be lyophilized, wherein these images are used for controlling and/or monitoring the lyophilization process, **characterized in that** the camera (9) is arranged within an interior (1) of the lyophilization unit that can be evacuated, and records images within the interior (1) that can be evacuated.

19. Method according to claim 18, **characterized in that** the images are evaluated using an evaluation unit.

20. Method according to claim 19, **characterized in that** parameters of the lyophilization process are changed using the evaluation unit.

21. Method according to claim 20, **characterized in that** based on the evaluation of the images, signals are transmitted from the evaluation unit to a control device of the lyophilization unit, on the basis of which the parameters of the lyophilization process are changed.

## Revendications

1. Dispositif pour la lyophilisation en série des solutions pharmaceutiques dans des corps creux médicaux, avec
- un appareil de lyophilisation et
- au moins une caméra (9),
dans lequel des images d'au moins une solution pharmaceutique destinée à la lyophilisation peuvent être enregistrées par la au moins une caméra (9), et dans lequel les images peuvent être utilisées pour contrôler et/ou vérifier le procédé de lyophilisation, **caractérisé en ce que** la caméra (9) est disposée dans un espace intérieur (1) évacuable de l'appareil de lyophilisation.

2. Dispositif selon la revendication 1, **caractérisé en ce qu'**il est prévu un dispositif d'évaluation qui évalue les images.

3. Dispositif selon la revendication 2, **caractérisé en ce que** le dispositif d'évaluation sert à la modification des paramètres du procédé de lyophilisation.

4. Dispositif selon la revendication 3, **caractérisé en ce que** des signaux basés sur l'évaluation des images peuvent être transmis à un dispositif de contrôle de l'appareil de lyophilisation par le dispositif d'évaluation, grâce à lesquels les paramètres du procédé de lyophilisation peuvent être modifiés.

5. Dispositif selon l'une quelconque des revendications précédentes, **caractérisé en ce que** la au moins une caméra (9) est une caméra analogique, une caméra numérique, une caméra macroscopique ou une webcam.

6. Dispositif selon l'une quelconque des revendications précédentes, **caractérisé en ce qu'**il est prévu un dispositif d'éclairage, de préférence une source de lumière froide.

7. Dispositif selon la revendication 6, **caractérisé en ce que** la au moins une caméra (9) comprend le dispositif d'éclairage.

8. Dispositif selon la revendication 7, **caractérisé en ce que** le dispositif d'éclairage est intégré dans la au moins une caméra (9).

9. Dispositif selon l'une quelconque des revendications précédentes, **caractérisé en ce qu'**au moins un boîtier (11) étanche au vide reçoit la au moins une caméra (9) et la entoure de préférence de manière étanche au vide.

10. Dispositif selon l'une quelconque des revendications précédentes, **caractérisé en ce que** la au moins une caméra (9) peut être utilisée dans une gamme de température de -60° C à 60° C.

11. Dispositif selon l'une quelconque des revendications précédentes, **caractérisé en ce que** la au moins une caméra (9) et/ou le au moins un boîtier (11) étanche au vide respectivement ont une faible densité des particules.

12. Dispositif selon l'une quelconque des revendications précédentes, **caractérisé en ce que** la au moins une caméra (9) et/ou le au moins un boîtier (11) étanche au vide respectivement sont isolés thermiquement.

13. Dispositif selon l'une quelconque des revendications précédentes, **caractérisé en ce que** la au moins une caméra (9) et/ou le au moins un boîtier (11) étanche au vide sont respectivement stérilisables.

14. Dispositif selon l'une quelconque des revendications précédentes, **caractérisé en ce que** la au moins une caméra (9) et/ou le au moins un boîtier (11) étanche au vide peuvent être attachés à un magasin pour le logement des corps creux médicaux.

15. Dispositif selon l'une quelconque des revendications précédentes, **caractérisé en ce que** plusieurs caméras (9) peuvent enregistrer des images de la au moins une solution pharmaceutique à partir des directions différentes.

16. Dispositif selon l'une quelconque des revendications précédentes, **caractérisé en ce que** la au moins une caméra (9) est configurée sous forme de système endoscopique.

17. Dispositif selon l'une quelconque des revendications précédentes, **caractérisé en ce que** la au moins une caméra (9) est sensible dans la région invisible du spectre électromagnétique.

18. Procédé pour vérifier et/ou contrôler la lyophilisation en série des solutions pharmaceutiques dans des corps creux médicaux, notamment en utilisant un dispositif selon les revendications 1 à 17, dans lequel un appareil de lyophilisation et au moins une caméra (9) sont prévus, la au moins une caméra (9) enregistrant des images de au moins une solution pharmaceutique destinée à la lyophilisation, les images étant utilisées pour la contrôle et/ou vérification du procédé de lyophilisation, **caractérisé en ce que** la caméra (9) est disposée dans un espace intérieur (1) évacuable de l'appareil de lyophilisation et enregistre des images dans le espace intérieur (1) évacuable.

19. Procédé selon la revendication 18, **caractérisé en ce que** les images sont évaluées au moyen d'un dispositif d'évaluation.

20. Procédé selon la revendication 19, **caractérisé en ce que** des paramètres du procédé de lyophilisation sont modifiés au moyen du dispositif d'évaluation.

21. Procédé selon la revendication 20, **caractérisé en ce que** des signaux basés sur l'évaluation des images sont transmis à un dispositif de contrôle de l'appareil de lyophilisation par le dispositif d'évaluation, grâce à lesquels les paramètres du procédé de lyophilisation sont modifiés.
